(19) Europäisches Patentamt
European Patent Office
Office européen des brevets

(11) **EP 2 814 236 A1**

(12) **EUROPEAN PATENT APPLICATION**

(43) Date of publication:
**17.12.2014 Bulletin 2014/51**

(51) Int Cl.:
*H04N 5/225* (2006.01)  *H04N 5/235* (2006.01)

(21) Application number: **13172065.8**

(22) Date of filing: **14.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Q Lifestyle Holding AB**
**111 44 Stockholm (SE)**

(72) Inventors:
• **Arcari, Andrea**
**111 44 Stockholm (SE)**
• **Ricci, Brandon**
**111 44 Stockholm (SE)**
• **Lesina, Giorgio**
**111 44 Stockholm (SE)**

(74) Representative: **Zacco Denmark A/S**
**Hans Bekkevolds Allé 7**
**2900 Hellerup (DK)**

(54) **Camera device and method for operating camera device**

(57) A method for operating a camera and a camera device is disclosed. The camera device comprises a user interface for receiving user input to the camera device, a sensor arrangement for image capturing and a flash arrangement comprising a plurality of light emitting diode (LED) elements. The plurality of LED elements includes at least a first LED element and a second LED element. The camera device comprises a controller unit including a flash controller connected to the user interface, the sensor arrangement and the flash arrangement. The controller unit is configured for operating the flash arrangement according to one or more operating schemes, such as according to a first operating scheme optionally in a first mode of operation and/or according to a second operating scheme in a first or second mode of operation. The first and/or second operating scheme may comprise individually controlling the first and second LED elements.

**Fig. 1**

## Description

The present invention relates to a camera device and a method for operating a camera device. The camera device comprises a flash arrangement, wherein the flash arrangement of the camera device in addition to flashing may be utilized for indicating one or more statuses of the camera, such as battery status/life, memory capacity, self timer status (time to image capture), quality of wireless connection (RSSI), upload status or others.

## BACKGROUND

With the recent developments of social media, shooting and sharing pictures on social media plays an increasingly larger role. With the developments of smartphones, users are able to take pictures and share them by uploading the pictures to the social media. However, it is well known that smartphone cameras typically do not provide sufficient image quality in particular in dark surroundings. Further, smartphones are usually at a high cost and fragile.

Further, in order to obtain a satisfactory image, images must be taken at times where the image objects have a desired appearance. For example it may be desired to take pictures of smiling persons and to avoid closed eyes.

## SUMMARY

There is a need for a camera device that is simple to use and which provides an improved user experience.

Accordingly, a camera device is disclosed, the camera device comprising a user interface for receiving user input to the camera device, a sensor arrangement for image capturing and a flash arrangement comprising a plurality of light emitting diode (LED) elements. The plurality of LED elements includes at least a first LED element and a second LED element. The camera device comprises a controller unit including a flash controller connected to the user interface, the sensor arrangement and the flash arrangement. The controller unit is configured for operating the flash arrangement according to one or more operating schemes, such as according to a first operating scheme optionally in a first mode of operation and/or according to a second operating scheme in a first or second mode of operation. The first and/or second operating scheme may comprise individually controlling the first and second LED elements.

Also disclosed is a method for operating a camera device comprising a flash arrangement comprising a plurality of LED elements including a first LED element and a second LED element, the method comprising operating the camera device in a first mode; controlling the first LED element and the second LED element according to a first operating scheme in the first mode; switching to a second mode; and controlling the first LED element and the second LED element according to a second operating scheme in the second mode, wherein the first and/or second operating scheme optionally comprises individually controlling the first LED element and the second LED element.

When a camera user operating the camera device wants to capture an image or picture of an image object it may be beneficiary to include a user indication feature in the flash arrangement, the user indication feature indicating to the image object relevant features such as the time to capture/recording of a picture. Thereby, the risk of unwanted movements of the image object during recording of the picture is reduced and the risk of blurry pictures is reduced.

The method and camera device according to the present invention may be configured to make use of the flash arrangement for more than flashing including red-eye reduction during image capture and utilizes the flash arrangement to provide camera status or operating parameters such as time to image capture to an object in front of the camera. Thereby, a user and/or an image object is able to see the status of the camera in a simple and fast way, which in turn may lead to images of higher quality and/or may reduce the number of pictures to be taken.

It is an advantage of the present invention that a cost-efficient camera device with satisfactory image quality is provided.

The camera device provides a simple and fast way of indicating the status of the camera device selected from a group comprising battery capacity, wireless connection quality (RSSI), shooting mode and memory capacity.

It is an advantage of the camera device of the present invention that camera statuses and/or operating parameters may be indicated to the user and/or an image object in a simple and clear way leading to improved user experience.

## BRIEF DESCRIPTION OF THE DRAWINGS

The above and other features and advantages of the present invention will become readily apparent to those skilled in the art by the following detailed description of exemplary embodiments thereof with reference to the attached drawings, in which:

Fig. 1      schematically illustrates an exemplary camera device,

Fig. 2A    schematically illustrates a front view of an exemplary camera device

Fig. 2B    schematically illustrates a first side view of a camera device,

Fig. 2C    schematically illustrates a back view of an exemplary camera device,,

Fig. 2D    schematically illustrates a second side view of a camera device,

Fig. 3A    schematically illustrates a top view of the camera device,

Fig. 3B    schematically illustrates a bottom view of the camera device,

Fig. 4    schematically illustrates a diagram showing the arrangement of integral components in a camera device,

Fig. 5    is a flow diagram of an exemplary method of operating a camera device,

Fig. 6    schematically illustrates an exemplary operating scheme with individual activation times,

Fig. 7    schematically illustrates an exemplary operating scheme with common activation and deactivation times,

Fig. 8    schematically illustrates an exemplary operating scheme with individual activation times and individual deactivation times,

Fig. 9    schematically illustrates an exemplary operating scheme with different light intensity levels, and.

Fig. 10    schematically illustrates an exemplary operating scheme with individually controlled deactivation.

The figures are schematic and simplified for clarity, and they merely show details which are essential to the understanding of the invention, while other details have been left out. Throughout, the same reference numerals are used for identical or corresponding parts.

DETAILED DESCRIPTION

The present invention relates to a method and a camera device comprising a flash arrangement. The flash arrangement may be operated according to one or more operating schemes. An operating scheme may comprise indications of a camera status and/or a time to image capture.

The camera device comprises a camera housing having a first surface (front) and a second surface (back). Furthermore, the camera housing comprises a top surface and a bottom surface. The first surface (front) of the camera housing is facing towards a target object and the second surface (back) of the camera housing is facing away from the target object.

The camera device may comprise a lens arrangement aligned with the sensor arrangement.

The camera device comprises a user interface configured for receiving user input. The user interface may comprise one or more buttons, e.g. including a first button and/or a second button. The user interface may comprise a third button and/or a fourth button. The user interface may comprise a slider or other selector device having a plurality of positions including a first and second position. The slider may be a three-position slider, i.e. a slider with a first position, a second position and a third position. The slider may be used for setting operating parameters or operation mode of the flash arrangement.

The slider may function as a flash mode selector, i.e. the operating scheme of the flash arrangement may be based on the position of the slider. For example, when the slider is in a first position, the flash arrangement may operate in an operating scheme configured for a first light condition, such as sunny light conditions with high light intensity. When the slider is in a second position, the flash arrangement may operate in an operating scheme configured for a second light condition, such as cloudy light conditions with medium light intensity. When the slider is in a third position, the flash arrangement may operate in an operating scheme configured for a third light condition, such as night time light conditions with low light intensity.

The slider may function as a sensor mode selector and/or as lens mode selector for allowing a user to adjust camera settings to different conditions.

The camera device comprises a sensor arrangement. The sensor arrangement may comprise one or more image sensors, such as a CCD image sensor, a CMOS image sensor or a sCMOS comprising a CMOS readout integrated circuits (ROICs) bonded to a CCD imaging substrate.

The camera device comprises a lens arrangement, and the lens arrangement may comprise a lens opening admitting light rays, optionally at least one optical lens for focusing admitted light rays and an aperture. The lens arrangement may comprise a first lens surface facing an image object. The lens arrangement may be mounted on the first surface of the camera housing or built into the first surface of the camera housing.

The lens arrangement may comprise a focus adjustment element for manual adjustment of the camera lens focal of the lens arrangement. The focus adjustment element may be mounted on the lens arrangement.

The camera device comprises a flash arrangement including a plurality of LED elements or other light emitting structures or elements. The plurality of LED elements includes at least a first light emitting diode (LED) element and a second LED element. The flash arrangement may comprise at least four LED elements such as five, six, seven, eight, nine, ten or more. A large number of LED elements may be desired from a user indication perspective, however a small number of LED elements may be desired from a flash control perspective. Accordingly, a number of LED elements in the range from 6 to 10 may be advantageous. The plurality of LED elements may form a flash arrangement having a shape of a ring, a non-regular or regular hexagon, heptagon, octagon, nonagon or decagon. The LED elements or at least the first and second LED elements are individually connected to the controller unit for individual control of each of or at least two, three, four or more LED elements of the flash arrangement according to one or more operation schemes in one or more modes of operation. An LED element may comprise a single LED or a plurality of LEDs. An LED element may comprise less than ten LEDs.

An LED element, such as the first LED element, may be configured for emitting light with a first wavelength for emitting a first color, such as red, green, or blue.

An LED element, such as the second LED element, may be configured for emitting light with a second wavelength for emitting a second color different from the first color. The second color may be red, green, or blue.

Typically, the time length T of an operating scheme is less than 30 seconds. Individually controlling the first LED element and the second LED element may comprise applying a first light intensity level to the first LED element and applying a second light intensity level different from the first light intensity level to the second LED element.

The camera device comprises a controller unit connected to the user interface, the sensor arrangement and the flash arrangement. The controller unit may comprise a flash controller. The controller unit/the flash controller controls the flash arrangement according to an operating scheme selected from a plurality of operating schemes. An operating scheme defines or sets operation of the LED elements of the flash arrangement.

An operating scheme, e.g. the first operating scheme, may comprise simultaneously activating and/or deactivating one or more, such as each of or two, three, four, five or more, LED elements including the first LED element and/or the second LED element. An operating scheme, e.g. the first operating scheme, may comprise simultaneously activating and/or deactivating a selected set of LED elements. An operating scheme, e.g. the first operating scheme and/or the second operating scheme may comprise individually activating each of or two, three, four, five or more LED elements, such as the first LED element and the second LED element. An operating scheme, e.g. the first operating scheme and/or the second operating scheme may comprise individually deactivating the first LED element and the second LED element.

A third operating scheme different from the first and second operating scheme may comprise individually activating and/or deactivating each of or two, three, four, five or more LED elements, such as the first LED element and the second LED element.

One or more operating schemes, e.g. the first and/or the second operating scheme, may be indicative of time to image capture.

One or more operating schemes, e.g. the second operating scheme and/or a third operating scheme, may be indicative of a camera status selected from battery capacity, wireless connection quality (RSSI), shooting mode and memory capacity. The controller unit may be configured to determine a status parameter, such as battery capacity indicator, wireless connection quality indicator (RSSI), shooting mode indicator and/or memory capacity indicator, determine an operating scheme based on the status parameter and operate the flash arrangement according to the operating scheme.

A fourth operating scheme may be indicative of battery capacity.

A fifth operating scheme may be indicative of wireless connection quality (RSSI).

A sixth operating scheme may be indicative of shooting mode.

A seventh operating scheme may be indicative memory capacity.

The flash arrangement may comprise a third LED element. An operating scheme, such as the first and/or second operating scheme, may comprise individually controlling, e.g. individually activating and/or deactivating, the third LED element.

The flash arrangement may comprise a fourth LED element. An operating scheme, such as the first and/or second operating scheme, may comprise individually controlling, e.g. individually activating and/or deactivating, the fourth LED element.

The flash arrangement may comprise a fifth LED element. An operating scheme, such as the first and/or second operating scheme, may comprise individually controlling, e.g. individually activating and/or deactivating, the fifth LED element.

The flash arrangement may comprise a sixth LED element. An operating scheme, such as the first and/or second operating scheme, may comprise individually controlling, e.g. individually activating and/or deactivating, the sixth LED element.

The flash arrangement may comprise a seventh LED element. An operating scheme, such as the first and/or second operating scheme, may comprise individually controlling, e.g. individually activating and/or deactivating, the seventh LED element.

The flash arrangement may comprise an eighth LED element. An operating scheme, such as the first and/or second operating scheme, may comprise individually controlling, e.g. individually activating and/or deactivating, the eighth LED element.

The first LED element and/or the second LED element may emit light with a first intensity level in the first mode and with a second light intensity level in the second mode, the first light intensity being different from, such as larger than, the second light intensity.

An operating scheme may define or set activation time and/or deactivation time of the respective LED elements of the flash arrangement. The activation time of an LED element in an operating scheme is denoted $t_{i,j}$ where i is an index indicative of operating scheme and j is an index indicative of the LED element. The deactivation time of an LED element in an operating scheme is denoted $t'_{i,j}$ where i is an index indicative of operating scheme and j is an index indicative of the LED element. An LED element may be activated more than once during an operating scheme, e.g. during redeye reduction or during an operating scheme for indicating time to image capture including a flash, and in such case a further index k is added to the activation times $t_{i,j,k}$ and deactivation times $t'_{i,j,k}$.

Accordingly, a first operating scheme may include a first LED element being activated at an activation time $t_{1,1}$ and deactivated at a deactivation time $t'_{1,1}$, and a second LED element being activated at an activation time $t_{1,2}$ and deactivated at a deactivation time $t'_{1,2}$. An activation time $t_{i,j}$ is defined as being the time elapsed from the beginning to of the operating scheme to an activation of a LED element. A deactivation time $t'_{i,j}$ is defined as being the time elapsed from the beginning of the operating scheme $t_0$ to the deactivation of a LED element.

An operating scheme may define or set intensity levels of the respective LED elements. The intensity level of an LED element in an operating scheme is denoted $P_{i,j}$, where i is an index indicative of operating scheme and j is an index indicative of the LED element. Accordingly, the intensity level of the first LED element in the first operating scheme is denoted $P_{1,1}$ and the intensity level of the first LED in the second operating scheme is denoted $P_{2,1}$. The intensity level of the second LED element in the first operating scheme is denoted $P_{1,2}$ and the intensity level of the second LED in the second operating scheme is denoted $P_{2,2}$. The intensity level of an LED element may vary during an operating scheme, e.g. the intensity level $P_{1,1,1}$ in a first activation period of the first LED element in the first operating scheme may take a first value and the intensity level $P_{1,1,2}$ in a second activation period of the first LED element in the first operating scheme may take a second value different from the first value.

In one or more exemplary operation scemes, e.g. first (i=1), second (i=2) and/or third (i=3) operating scheme, the intensity level $P_{i,1}$ of the first LED element is different from, such as larger or less than the intensity level $P_{i,2}$ of the second LED element. In one or more exemplary operation scemes, e.g. first (i=1), second (i=2) and/or third (i=3) operating scheme, the intensity levels $P_{i,j}$ of the i'th LED element may be varied individually and separate or at least partly in common from the intensity levels $P_{i,j}$ of other other LEDs.

An operating scheme may define activation time delay(s), wherein an activation time delay $\Delta t_{n,m}$ is defined as the time difference between activation times of two LED elements respectively indicated with indexes m and n. For example, the activation time delay(s) may include a time delay $\Delta t_{1,2}$ being the time difference between the activation time $t_{i,1}$ and the activation time $t_{i,2}$ of the first LED element and the second LED element in the i'th operating scheme. The activation time delays $\Delta t$ between neighbouring activation times may be in the range from 0 seconds to 5 seconds, such as in the range from 0.5 seconds to 2.0 seconds.

An operating scheme may define deactivation time delay(s), wherein a deactivation time delay $\Delta t'_{n,m}$ is defined as the time difference between deactivation times of two LED elements respectively indicated with indexes m and n. For example, the deactivation time delay(s) may include a deactivation time delay $\Delta t'_{1,2}$ being the time difference between deactivation time $t'_{i,1}$ and deactivation time $t'_{i,2}$. The deactivation time delays $\Delta t'$ between neighbouring deactivation times may be in the range from 0 seconds to 5 seconds, such as in the range from 0.5 seconds to 2.0 seconds.

In one or more exemplary operating schemes, e.g. first, second and/or third operating scheme, two or more LED elements, e.g. the first LED element, the second LED element and optionally the third LED element are activated simultaneously or within a short time less than 0.2 seconds.

In one or more exemplary operating schemes, e.g. first, second and/or third operating scheme, two or more LED elements, e.g. the first LED element, the second LED element and optionally the third LED element are deactivated simultaneously or within a short time less than 0.2 seconds.

In one or more exemplary operating schemes, e.g. first, second and/or third operating scheme, activation time delay $\Delta t_{1,2}$ and/or deactivation time delay $\Delta t'_{1,2}$ is larger than 0.2 seconds, such as in the range from 0.3 seconds to 5 seconds. Such operating scheme(s) may be particular useful for indicating time to image capture or other situations where indicating count-down or time to an action is desired.

In one or more exemplary operating schemes, e.g. first, second and/or third operating scheme, activation time delay $\Delta t_{2,3}$ and/or deactivation time delay $\Delta t'_{2,3}$ is larger than 0.2 seconds, such as in the range from 0.3 seconds to 5 seconds.

An operating scheme may define one or more activation time periods for each LED element, wherein an activation time period $\Delta t p_{i,j}$, has a length being the time difference between an activation time $t'_{i,j}$ and the following deactivation time $t'_{i,j}$ of a LED element where i is an index indicative of operating scheme and j is an index indicative of the LED element. The activation time periods $\Delta tp$ of each LED elements may be in the range from 0 seconds to 10 seconds. At least some of the activation time periods during a flash of an operating scheme, such as in a first operating scheme, may be in the range from 0.1 ms to 800 ms, such as from 1 ms to 300 ms, e.g. about 5 ms, 30 ms, 50 ms, 100 ms, 150 ms, 200 ms, 250 ms, or any ranges therebetween.

In one or more exemplary operating schemes, e.g. first (i=1), second (i=2) and/or third (i=3) operating scheme, an activation time period $\Delta t p_{i,1}$ of the first LED element is larger than 0.3 seconds, such as in the range from 0.5 seconds to 10 seconds.

In one or more exemplary operating schemes, e.g. first (i=1), second (i=2) and/or third (i=3) operating scheme, an activation time period $\Delta tp_{i,2}$ of the second LED element is larger than 0.3 seconds, such as in the range from 0.5 seconds to 10 seconds.

In one or more exemplary operating schemes, e.g. first (i=1), second (i=2) and/or third (i=3) operating scheme, an activation time period $\Delta tp_{i,1}$ of the first LED element is less than 0.3 seconds, such as in the range from 0.1 ms to 250 ms.

In one or more exemplary operating schemes, e.g. first (i=1), second (i=2) and/or third (i=3) operating scheme, an activation time period $\Delta tp_{i,2}$ of the second LED element is less than 0.3 seconds, such as in the range from 0.1 ms to 250 ms.

The camera device is configured to operate in a plurality of modes including a first mode and a second mode, e.g. depending on user input via the user interface. The first mode may include operating the flash arrangement according to one or more operating schemes including a first operating scheme, e.g. dependent on user input via the user interface. The second mode may include operating the flash arrangement according to one or more operating schemes including a second operating scheme, e.g. dependent on user input via the user interface. In the first mode, the plurality of LED elements may be activated and/or deactivated according to a first operating scheme, wherein the first operating scheme comprises activating and/or deactivating at least the first and second LED element simultaneously or withing a time frame of e.g. 5 ms, i.e. $t_{1,1}=t_{1,2}$ and/or $t'_{1,1}=t'_{1,2}$.

Furthermore, in the second mode or in the first mode, the plurality of LED elements may be activated and/or deactivated according to a second operation scheme, wherein the second operation scheme activates and/or deactivates at least the first LED element and the second LED element individually and a different times, i.e. $t_{2,1}\neq t_{2,2}$ and/or $t'_{2,1}\neq t'_{2,2}$. The first, second, and/or a further operating scheme, such as a third or fourth operating scheme may be indicative of time to image capture. The first, second, and/or a further operating scheme, such as a third or fourth operating scheme may be indicative of a camera status selected from battery capacity, wireless connection quality (RSSI), shooting mode and memory capacity.

The controller unit may be configured to activate an operating scheme based on user input received via the user interface.

The user may be able to adjust one or more intensity levels via the user interface.

In the method, controlling the first LED element and the second LED element according to the first operating scheme may comprise simultaneously activating and/or deactivating the first LED element and the second LED element.

In the method, controlling the first LED element and the second LED element according to the second operating scheme may comprise individually activating the first LED element and the second LED element in the second operating scheme.

In the method, controlling the first LED element and the second LED element according to a second operating scheme may comprise selectively deactivating the plurality of LED elements in the second operating scheme.

In the method, controlling the first LED element and the second LED element according to a first operating scheme in the first mode may comprise emitting light with a first intensity level. Controlling the plurality of LED units in the second mode may comprise emitting light with a second light intensity level, the first light intensity level being larger than the second light intensity level.

The camera device may comprise a wireless communication unit, e.g. including a 3G module and/or a WIFI module. The wireless communication unit may be configured to upload a recorded picture or image to a server at a selected provider for upload to a social network or other image network, such as Facebook, Instagram, Dailybooth, Flickr, Fotki, Fotolog, My Opera or Twitter. The configuration of at least one preselected social network is performed by the user or the distributor of the camera device. Further, the wireless communication unit may upload the recorded picture to a cloud computing network, the cloud computing network being Client-server software on a remote station. The Client-server may be a web-server for storing personal information, such as pictures. Furthermore, the camera device may comprise one or more of a memory unit for storing the recorded picture locally, a SIM card slot, a battery compartment for accommodation of a battery or other power source, and a connection interface, e.g. for transferring data between the camera device and an external unit and/or charging a battery or other power source. The connection interface may include a mini USB interface

The camera device may comprise a viewfinder shaped as an opening from the first surface to the second surface of the camera housing. The viewfinder may have a rectangular cross section. The viewfinder may be used by the user for composing a picture of the target object. The user looks through the viewfinder and what the user sees reflects what is recorded by the camera device.

The camera device may comprise a view display for live view functionality and/or for displaying a recorded picture or parts thereof. The view display may be a CCD display or other display known for cameras.

Shooting modes refer to different light emitting configurations of the flash arrangement during an image capturing. The shooting modes may include full light intensity, medium light intensity, low light intensity, left, top, bottom or right side flash (selected LED elements activated), full flash (all LED elements activated), etc.

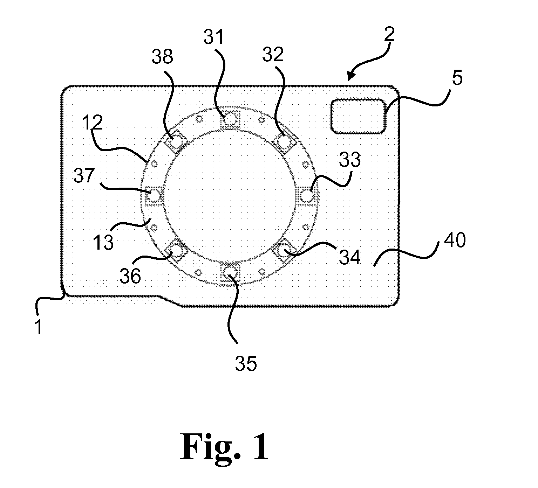

Fig. 1 schematically illustrates an exemplary camera device 2 according to the invention. The camera device 2 has a camera housing 1 and a flash arrangement 12 including a first LED element 31, a second LED element 32, a third LED element 33, a fourth LED element 34, a fifth LED element 35, a sixth LED element 36, a seventh LED element 37 and a eighth LED element 38. The LED elements are mounted on a printed circuit board (PCB) 13 around the lens opening of the camera device. A viewfinder 5 is shaped as an opening with rectangular cross section from the first surface 40 of the camera housing to the second surface (not shown) of the camera housing. The number of LED elements in the flash arrangement may be at least three, such as four, five, six or more.

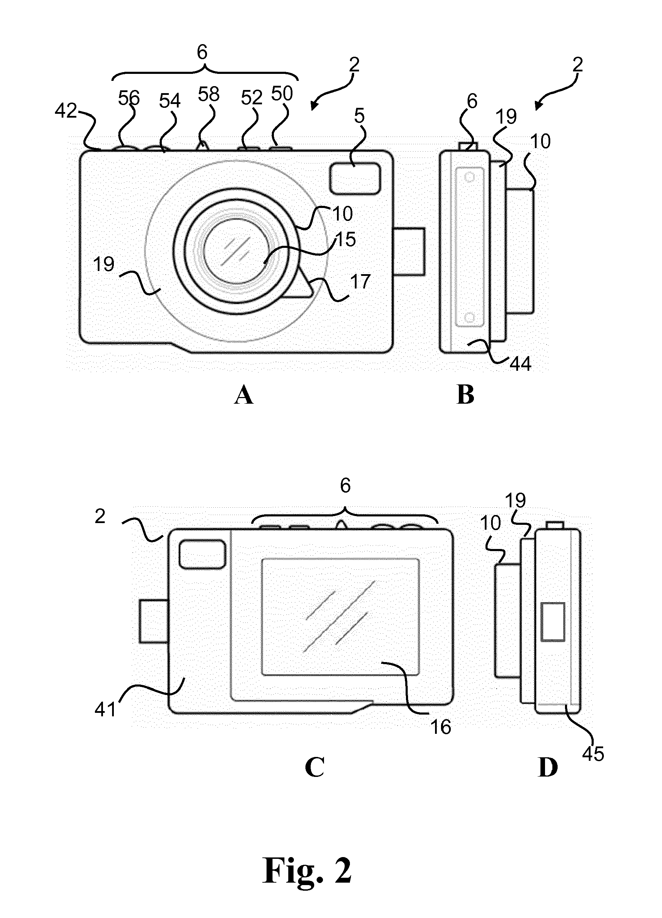

Fig. 2A-D show different views of a camera device 2 according to the invention. Fig. 2A is a front view of an exemplary camera device 2 comprising a user interface 6 including four buttons 50, 52, 54, 56 and a three-position slider 58. The user interface 6 is mounted on the top surface 42 of the camera housing. A diffuser 19 is mounted distal to and covering LED elements 31-38. The diffuser is mounted on the first surface 40 of the camera housing. The lens arrangement 10 comprise focus adjustment element 17. Furthermore, the lens arrangement 10 optionally comprises at least one optical lens 10' and/or a lens opening 15 admitting light rays onto the sensor arrangement. Fig. 2B is a first side view of the camera device 2 showing a first side 44 of the camera housing. Fig. 2C is a back view of the camera device 2. The camera device 2 comprises a view display 16 for live view functionality and for displaying recorded picture(s). The view display 16 is mounted on the second surface 41 of the camera housing 4. Fig. 2D is a second side view of the camera device 2 with the second side surface 45 of the camera housing.

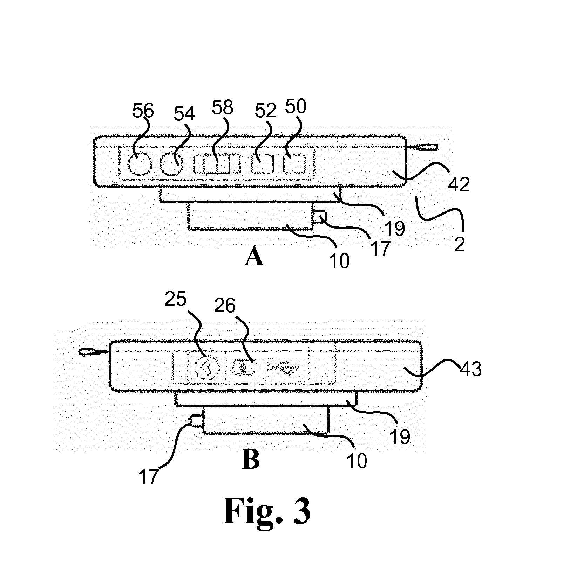

Figs. 3A and 3B illustrate top and bottom views of the camera device 2, respectively. The camera device 2 comprises a mini-USB port 25 and a SIM card Slot 26.

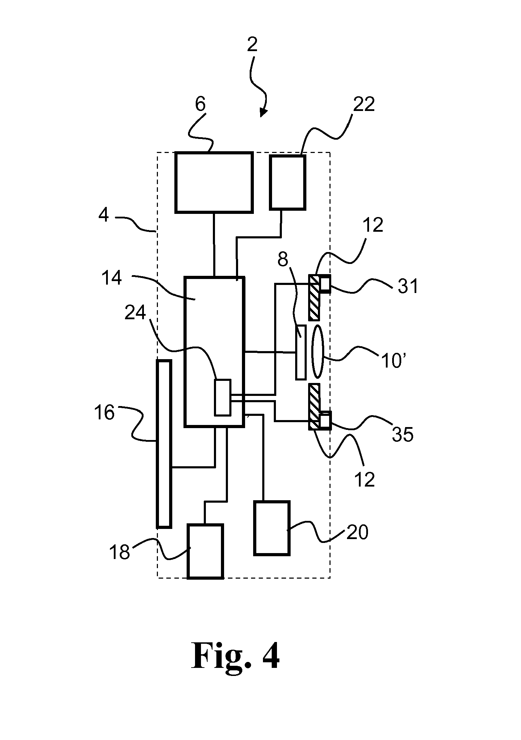

Fig. 4 schematically illustrates a block diagram of the camera device 2. The camera device 2 comprises a camera housing 4 accommodating a controller unit 14 including a flash controller 24. The controller unit 14 is connected to a user interface 6, a battery 22, a view display 16, a wireless communication unit 18, a memory unit 20, a sensor arrangement 8, a lens arrangement 10, and a flash arrangement 12 including a first LED element 31 and a fifth LED element 35. The controller unit 14 is configured to individually and separately control the LED elements 31-38 of the flash arrangement 12 according to one or more operating schemes, e.g. depending on mode of operation and/or user input via the user interface. For example, activation of a button may trigger the control unit to indicate the battery status of the camera by individually controlling at least the first and second LED elements of the flash arrangement according to a second operating scheme, optionally determined by the control unit. Further, activation of a button may trigger the control unit to initiate image capturing including flash, i.e. operating the flash arrangement according to a first operation scheme including simultaneous activation of all or at least 80% or the LED elements. Further, activation of a button may trigger the control unit to initiate image capturing including flash with indication of time to image capture by operating the flash arrangement according to a second or third operation scheme with individual activation and/or deactivation of three or more LED elements optionally followed by simultaneous activation of all LED elements (flash) during and/or before image capture.

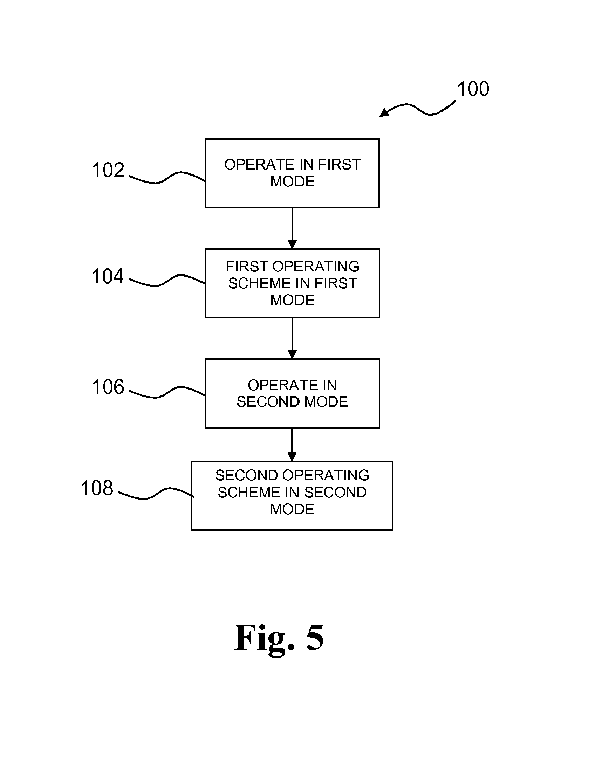

Fig. 5 is a flow diagram 100 of an exemplary method of operating a camera device 2. When turned on, the camera device operates 102 in a first mode, e.g. depending on user input from the user interface. The method proceeds to controlling 104 the flash arrangement and in particular the first LED element and the second LED element of the camera device according to a first operating scheme in the first mode, optionally based on user activation of the user interface. The method optionally comprises switching 106 to a second mode, for example based on user input via the user interface and proceeds to controlling 108 the first LED element and the second LED element according to a second operating scheme in the first mode or the second mode, wherein the second operating scheme comprises individually controlling the first LED element and the second LED element.

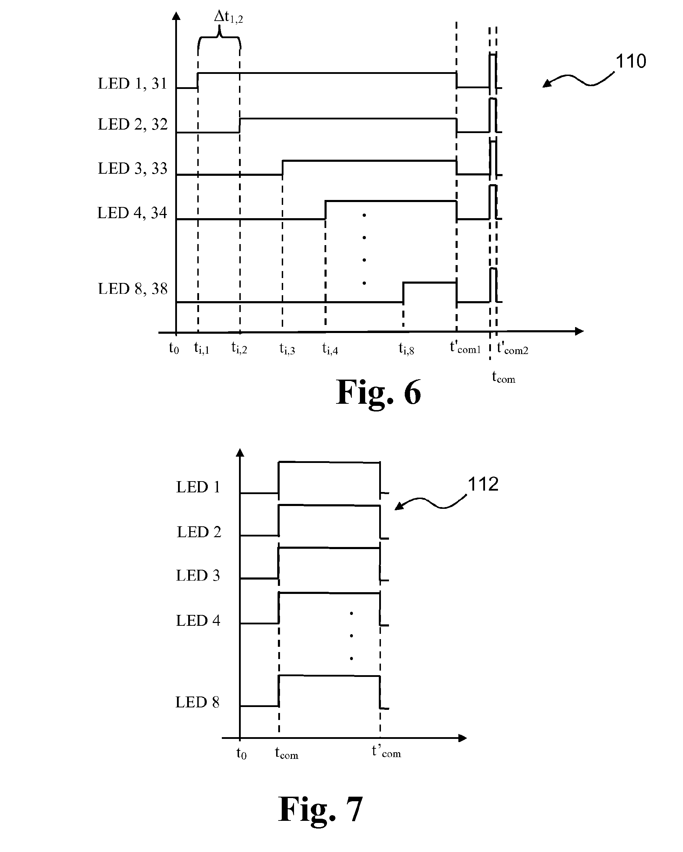

Fig. 6 schematically illustrates an exemplary i'th operating scheme 110 of a camera device. The operating scheme starts at to and at activation time $t_{i,1}$ the first LED element is activated followed by individual activation of at least the second LED element 32 at activation time $t_{i,2}$ larger than $t_{i,1}$ and the third LED element 33 at activation time $t_{i,3}$ larger than $t_{i,2}$. The second LED element 32 is individually activated after the first LED element with activation time delay $\Delta t_{i,2}$ of about 0.5 seconds. The third LED element 33 is individually activated a $t_{i,3}$ after activation of the second LED element 32 with activation time delay $\Delta t_{2,3}$, optionally equal to $\Delta t_{1,2}$. The LED elements are deactivated simultaneously at time $t'_{com}$. Optionally the operating scheme 110 comprises a common activation (flash) at activation time $t_{com}$ after the common deactivation time $t'_{com}$. The common activation of LED elements may be at a second light intensity level larger than the first light intensity level used during the individual activation of LED elements. This allows power efficient operation of the flash arrangement. The common activation of LED elements is followed by a second common deactivation. In an operating scheme e.g. used for battery capacity indication, the controller unit may determine the number of LED elements to be activated, e.g. 5 out of 8 if the capacity is in a range of from 62.5% to 75% and operate the flash arrangement according to operating scheme 110 except for the common activation (flash) and where the number of activated LEDs (e.g. LED elements 31-35 in case of 65 %) depends on the determined battery capacity.

Fig. 7 schematically illustrates an exemplary i'th operating scheme 112 of a camera device. The operating scheme starts at to and at common activation time $t_{com}$ all eight LED elements 31-38 are simultaneously activated followed by simultaneous deactivation of the LED element 31-38 at common deactivation time t'$_{com}$.

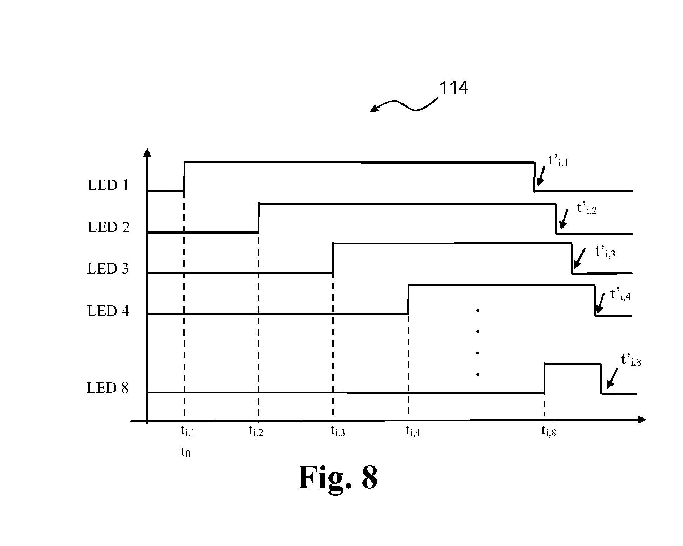

Fig. 8 schematically illustrates an exemplary i'th operating scheme 114 of a camera device where the eight LED elements LED1 to LED8 are individually activated and deactivated.

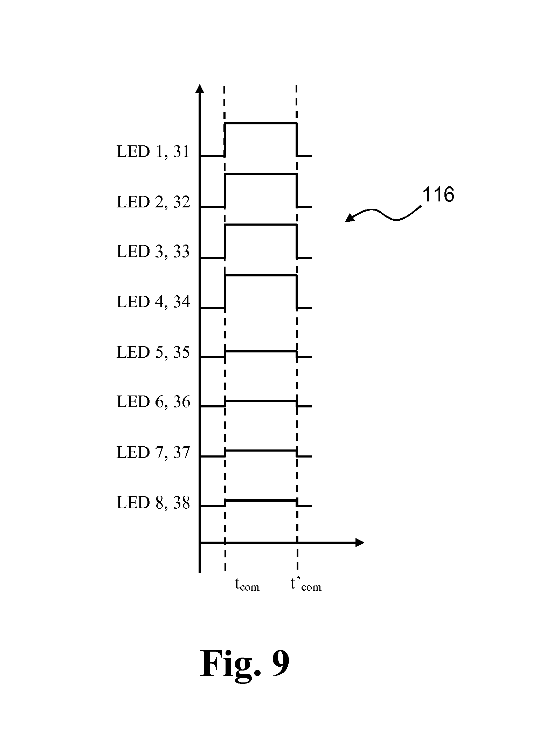

Fig. 9 schematically illustrates an exemplary operating scheme for indicating battery status of the camera device. In the present example, a battery capacity of 50% has been determined by the controller unit. A first set of LED elements including LED elements 31-34 corresponding to 50 % is activated with a first light intensity level.

Further a second set of LED elements including LED elements 35-38 may optionally be activated with a second light intensity level lower than the first light intensity level, such as from 0.1 to 0.7 times the first light intensity level. The activation time period is in the range from 1 to 5 seconds, such as 3 seconds. One or more LED elements may be activated with a third light intensity level, e.g. between the first light intensity level and the second light intensity level.

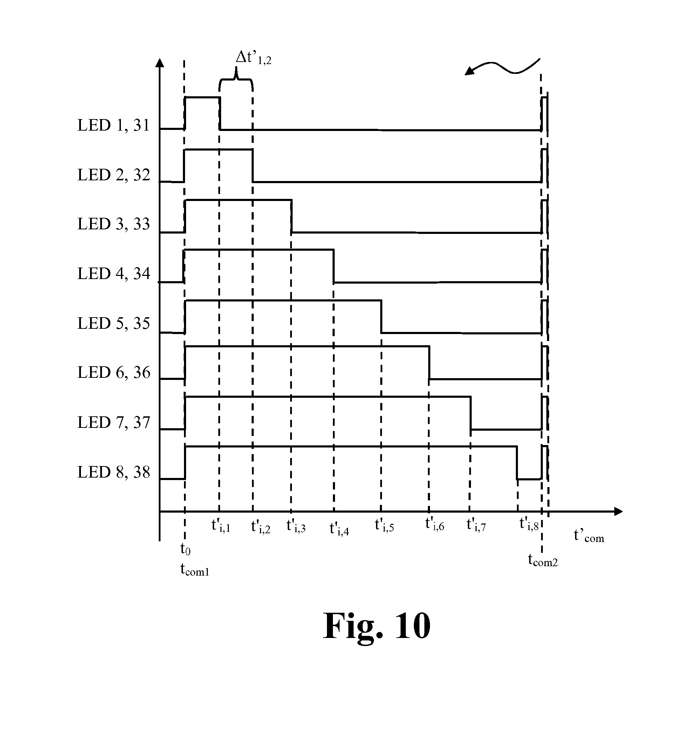

Fig. 10 schematically illustrates an exemplary i'th operating scheme 118 of a camera device. The operating scheme starts at t$_{com1}$ with a first common activation of all LED elements 31-38 followed by a sequential and individual deactivation the LED elements, where

$$t'_{i,1} < t'_{i,2} < t'_{i,3} < t'_{i,4} < t'_{i,5} < t'_{i,6} < t'_{i,7} < t'_{i,8}$$

and with uniform deactivation time delays $\Delta t'_{1,2}$, $\Delta t'_{2,3}$, $\Delta t'_{3,4}$, $\Delta t'_{4,5}$, $\Delta t'_{5,6}$, $\Delta t'_{6,7}$, $\Delta t'_{7,8}$ in the range from 0.2 seconds to 1 second, such as about 0.5 as illustrated. In general deactivation time delays may vary and configured for desired operation. Subsequently, the LED elements may simultaneously be activated at a second activation time t$_{com2}$, optionally with larger, the same or lower light intensity than in the first activation period. The LED elements are commonly deactivated simultaneously at time t'$_{com}$.

LIST OF REFERENCES

| | |
|---|---|
| 2 | camera device |
| 4 | camera housing |
| 5 | viewfinder |
| 6 | user interface |
| 8 | sensor arrangement |
| 10 | lens arrangement |
| 10' | optical lens |
| 12 | flash arrangement |
| 13 | printed circuit board (PCB) |
| 14 | controller unit |
| 15 | lens opening |
| 16 | view display |

| | |
|---|---|
| 17 | focus adjustment element |
| 18 | wireless communication unit |
| 19 | diffuser |
| 20 | memory unit |
| 22 | battery |
| 23 | wearing string |
| 24 | flash controller |
| 25 | mini-USB port |
| 26 | SIM card slot |
| 31 | first LED element |
| 32 | second LED element |
| 33 | third LED element |
| 34 | fourth LED element |
| 35 | fifth LED element |
| 36 | sixth LED element |
| 37 | seventh LED element |
| 38 | eighth LED element |
| 40 | first surface of the camera housing |
| 41 | second surface of the camera housing |
| 42 | top surface of the camera housing |
| 43 | bottom surface of the camera housing |
| 44 | first side of the camera housing |
| 45 | second side of the camera housing |
| 50 | first button |
| 52 | second button |
| 54 | third button |
| 56 | fourth button |
| 58 | slider |
| 100 | method |
| 102 | operate in first mode |
| 104 | control LED elements according to first operating scheme |
| 106 | operate in second mode |
| 108 | control LED elements according to second operating scheme |
| 110 | exemplary operating scheme |
| 112 | exemplary operating scheme |
| 114 | exemplary operating scheme |
| 116 | exemplary operating scheme |
| 118 | exemplary operating scheme |

**Claims**

1. A camera device comprising;

- a user interface for receiving user input to the camera device,
- a sensor arrangement for image capturing,
- a flash arrangement comprising a plurality of LED elements including a first LED element and a second LED element, and
- a controller unit including a flash controller, wherein the controller unit is connected to the user interface, the sensor arrangement and the flash arrangement,

wherein the controller unit is configured for operating the flash arrangement according to a first operating scheme in a first mode of operation and according to a second operating scheme in a second mode.of operation, wherein the second operating scheme comprises individually controlling the first LED element and the second LED element.

2. Camera device according to claim 1, wherein the first operating scheme comprises simultaneously activating and/or deactivating the first LED element and the second LED element.

3. Camera device according to any of the preceding claims, wherein the second operating scheme comprises individually activating the first LED element and the second LED element.

4. Camera device according to any of the preceding claims, wherein the second operating scheme comprises individually de-activating the first LED element and the second LED element..

5. Camera device according to any of the preceding claims, wherein the second operating scheme is indicative of time to image capture.

6. Camera device according to any of the claims 1-4, wherein the second operating scheme is indicative of a camera status selected from battery capacity, wireless connection quality (RSSI), shooting mode and memory capacity.

7. Camera device according to any of the preceding claims, wherein the first LED element and the second LED element emit light with a first intensity in the first mode and with a second light intensity in the second mode, the first light intensity being larger than the second light intensity.

8. Camera device according to any of the preceding claims, wherein the plurality of LED elements are mounted in the camera device.

9. A method for operating a camera device comprising a flash arrangement comprising a plurality of LED elements including a first LED element and a second LED element, the method comprising

- operating the camera device in a first mode;
- controlling the first LED element and the second LED element according to a first operating scheme in the first mode;
- switching to a second mode; and
- controlling the first LED element and the second LED element according to a second operating scheme in the second mode, wherein the second operating scheme comprises individually controlling the first LED element and the second LED element..

10. Method according to claim 9, wherein controlling the first LED element and the second LED element according to the first operating scheme comprises simultaneously activating and/or deactivating the first LED element and the second LED element.

11. Method according to any of claims 9-10, wherein controlling the first LED element and the second LED element according to the second operating scheme comprises individually activating the first LED element and the second LED element in the second operating scheme.

12. Method according to any of claims 9-11, wherein controlling the first LED element and the second LED element according to a second operating scheme comprises selectively deactivating the plurality of LED elements in the second operating scheme.

13. Method according to any of claims 9-12, wherein the second operating scheme is indicative of time to image capture

14. Method according to any of claims 9-12, wherein the second operating scheme is indicative of a camera status selected from the group of battery capacity, wireless connection quality (RSSI), shooting modes and memory capacity.

15. Method according to any of claims 9 - 14, wherein controlling the first LED element and the second LED element according to a first second operating scheme in the first mode comprises emitting light with a first intensity level, and wherein controlling the plurality of LED units in the second mode comprises emitting light with a second light intensity level, the first light intensity level being larger than the second light intensity level.

**Fig. 1**

**Fig. 2**

56  54  58  52  50

A

42

19

17

10

2

25  26

43

19

17

10

B

# Fig. 3

**Fig. 4**

100

```
      102 ⟶   ┌─────────────────┐
                │ OPERATE IN FIRST │
                │      MODE        │
                └─────────────────┘
                         │
                         ▼
      104 ⟶   ┌─────────────────┐
                │ FIRST OPERATING │
                │ SCHEME IN FIRST │
                │      MODE        │
                └─────────────────┘
                         │
                         ▼
      106 ⟶   ┌─────────────────┐
                │   OPERATE IN    │
                │  SECOND MODE    │
                └─────────────────┘
                         │
                         ▼
      108 ⟶   ┌─────────────────┐
                │ SECOND OPERATING│
                │ SCHEME IN SECOND│
                │      MODE        │
                └─────────────────┘
```

# Fig. 5

**Fig. 6**

**Fig. 7**

Fig. 8

**Fig. 9**

Fig. 10

Europäisches
Patentamt

European
Patent Office

Office européen
des brevets

# EUROPEAN SEARCH REPORT

**Application Number**

EP 13 17 2065

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/068457 A1 (YAMAMOTO ISAO [JP] ET AL) 31 March 2005 (2005-03-31) * paragraphs [0008], [0037]; figures 3,4A * | 1-15 | INV. H04N5/225 H04N5/235 |
| A | WO 2009/074938 A2 (KONINKL PHILIPS ELECTRONICS NV [NL]; KURT RALPH [NL]; MEIJER EDUARD J) 18 June 2009 (2009-06-18) * abstract; figure 4 * | 1,9 | |
| A | WO 2007/087334 A2 (ACCU SPORT INT INC [US]; RANKIN DAVID BENJAMIN [US]) 2 August 2007 (2007-08-02) * paragraph [0022] * | 1,9 | |

| | | | TECHNICAL FIELDS SEARCHED (IPC) |
|---|---|---|---|
| | | | H04N G03B |

The present search report has been drawn up for all claims

| Place of search | Date of completion of the search | Examiner |
|---|---|---|
| The Hague | 11 September 2013 | Zakharian, Andre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 17 2065

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2013

| Patent document cited in search report | | | Publication date | Patent family member(s) | | | Publication date |
|---|---|---|---|---|---|---|---|
| US 2005068457 | A1 | | 31-03-2005 | CN | 1602028 | A | 30-03-2005 |
| | | | | JP | 3833646 | B2 | 18-10-2006 |
| | | | | JP | 2005102000 | A | 14-04-2005 |
| | | | | KR | 20050030603 | A | 30-03-2005 |
| | | | | US | 2005068457 | A1 | 31-03-2005 |
| WO 2009074938 | A2 | | 18-06-2009 | CN | 101896866 | A | 24-11-2010 |
| | | | | EP | 2223183 | A2 | 01-09-2010 |
| | | | | JP | 2011507023 | A | 03-03-2011 |
| | | | | KR | 20100095627 | A | 31-08-2010 |
| | | | | RU | 2010128573 | A | 20-01-2012 |
| | | | | TW | 200931154 | A | 16-07-2009 |
| | | | | US | 2010254692 | A1 | 07-10-2010 |
| | | | | WO | 2009074938 | A2 | 18-06-2009 |
| WO 2007087334 | A2 | | 02-08-2007 | US | 2007201003 | A1 | 30-08-2007 |
| | | | | WO | 2007087334 | A2 | 02-08-2007 |

EPO FORM P0459

For more details about this annex : see Official Journal of the European Patent Office, No. 12/82